(19) Europäisches Patentamt / European Patent Office / Office européen des brevets

(11) **EP 4 614 888 B1**

(12) **EUROPEAN PATENT SPECIFICATION**

(45) Date of publication and mention
of the grant of the patent:
**24.06.2026 Bulletin 2026/26**

(21) Application number: **24162491.5**

(22) Date of filing: **08.03.2024**

(51) International Patent Classification (IPC):
**H04L 25/02** (2006.01)     **H04B 17/309** (2015.01)
**H04B 17/373** (2015.01)     **H04B 17/391** (2015.01)

(52) Cooperative Patent Classification (CPC):
**H04L 25/0224; H04B 17/328; H04B 17/373;**
**H04B 17/3912**

(54) **METHOD, COMPUTER PROGRAM, AND APPARATUS FOR PREDICTING A RECEPTION QUALITY IN A MOBILE COMMUNICATION SYSTEM**

VERFAHREN, COMPUTERPROGRAMM UND VORRICHTUNG ZUR VORHERSAGE EINER EMPFANGSQUALITÄT IN EINEM MOBILEN KOMMUNIKATIONSSYSTEM

PROCÉDÉ, PROGRAMME INFORMATIQUE ET APPAREIL DE PRÉDICTION D'UNE QUALITÉ DE RÉCEPTION DANS UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**10.09.2025 Bulletin 2025/37**

(73) Proprietor: **Deutsche Telekom AG**
**53113 Bonn (DE)**

(72) Inventor: **XU, Bangnan**
**64291 Darmstadt (DE)**

(74) Representative: **2SPL Patentanwälte PartG mbB**
**Landaubogen 3a**
**81373 München (DE)**

(56) References cited:
**US-A1- 2023 308 199    US-A1- 2024 039 649**
**US-B1- 10 390 180**

**Description**

**Field**

Examples relate to a method, a computer program, and an apparatus for predicting a reception quality in a mobile communication system, more particularly, but not exclusively, to a concept for predicting a reception quality in a grid of regions, where at least for some regions no valid reception quality measurements are available.

**Background**

Mobile communication systems have evolved over the last decades and high-quality wireless services have become available. Emerging 5G (5th Generation mobile network) services, e.g. live video productions, have very challenging requirements on throughput and/or latency. To meet such challenging requirements and to use the radio resources efficiently, it is beneficial to predict receiving conditions at the location of a mobile terminal. There are several indicators that may be used to predict or indicate a reception quality. One example is the reference signal receiving power (RSRP), which is used in 5G networks as defined by the 3$^{rd}$ Generation Partnership Project (3GPP). A cell specific reference signal is transmitted by a base station or nodeB. At user equipment, UE, the reference signal can be measured, e.g. in terms of reception power at the UE.

For example, RSRP is the linear average of reference signal power (in Watts) across the specified bandwidth. A UE may measure the RSRP for cell selection, reselection and handover. Further details on a formal definition of RSRP can be found in 3GPP Technical specification (TS) 36.214. For RSRP determination cell-specific reference signals R0 according 3GPP TS 36.211 shall be used. If the UE can reliably detect that R1 is available, it may use R1 in addition to R0 to determine RSRP.

US2023/0308199A1 builds a base-station coverage "map" by dividing the coverage area into 3D grid regions (Cartesian/spherical) and assigning each region a measured radio-signal quality from collected UE/base-station measurements. It predicts a UE future path (vector/ML/Markov) and derives link-performance predictions along that path. No per-region channel-model calculation and delta correction from an adjacent region is taught.

**Summary**

It is a finding of the present disclosure that RSRP is usually measured in a mobile terminal for cell selection, reselection and handover and reported to base station for scheduling radio resources and deciding MCS (modulation and coding scheme) for this mobile terminal. However, there is a demand to know or to predict the RSRP of a mobile terminal at a certain location before it can be measured. It is a further finding that the reception quality predicted by channel modelling alone is not accurate enough due to the complexity of radio propagation. The accuracy of RSRP or any other reception quality prediction based on channel modelling can be improved by making use of measurements. Examples use a reception quality prediction algorithm based on a combination of measurement and channel modelling and provide a design for a system to implement an efficient algorithm or method for predicting a channel quality.

Examples provide a method for predicting a reception quality in a mobile communication system. The method comprises considering a grid of adjacent regions overlaying a coverage area of the mobile communication system and determining measured reception qualities for a subset of regions in the grid. The method further comprises determining a calculated reception quality per region in the grid based on a channel model applied for said region. For a region, for which no measured reception quality is available, the method further comprises determining a delta value as a difference between a measured reception quality and a calculated reception quality in an adjacent region. For this case the method further comprises obtaining a predicted reception quality for the region, for which no measured reception quality is available, by correcting a calculated reception quality for said region based on the delta value. Examples therewith enable reliable reception quality prediction also for regions for which no valid measurement is available.

For example, a measured reception quality is a reference signal reception power, RSRP, measured by user equipment in a region. The calculated reception quality may be a calculated RSRP for a region and the predicted reception quality may be a predicted RSRP for a region. Examples may enable an RSRP prediction in a 5G or 6G mobile communication system.

**In** a further example, the obtaining of a predicted reception quality for a specific region further comprises checking for the specific region, for which no measured reception quality is available, if a measured quality is available for one or more neighboring regions served by the same radio cell as the specific region. **In** case a measured quality for one or more neighboring regions is available the method (the obtaining, respectively) comprises determining one or more calculated reception quality values for the one or more neighboring regions and determining one or more delta values based on one or more differences between the one or more calculated reception qualities and the one or more measured reception qualities in the respective one or more neighboring regions. In case no measured quality is available for a neighboring region served by the same radio cell as the specific region, the delta value can be determined as a predefined cell-specific delta value or as a predefined global delta value in line with a respective channel model. Hence, examples may enable to base a prediction on multiple neighbor regions.

In case multiple delta values are available for multiple neighboring regions, the multiple delta values may be averaged to obtain an average delta value, which is used to correct the calculated reception quality for the specific region, for which no measured reception quality is available, to obtain the predicted reception quality for the specific region. The prediction may be enhanced by considering multiple neighboring regions.

The averaging may comprise considering delta values of multiple tiers of neighbor regions of the specific region, for which no measured reception quality is available. The averaging may further comprise weighting the delta values based on a distance between the respective region of a delta value and the specific region, for which no measured reception quality is available. Examples may enable to consider measurements of multiple tiers of neighboring regions to further enhance reception quality prediction for a region, for which no measurement is available.

For example, the measured reception quality is an average of a plurality of measurements taken in said region. An averaged measurement may be more reliable than a single measurement. Further, at least in some examples the determining of the calculated reception quality may use different channel models based on the characteristic of the radio environment in said region. Examples may enable enhanced calculations of reception quality by using channel models, which are selected based on radio characteristic in a certain region.

The characteristics of the radio environment in a region may be distinguished based on a presence of a line-of-sight connection, based on a grade of reflection present in the respective region, and/or based on a distance and an angle relative to a transmit antenna covering said region. Examples may use adapted channel models for the calculation. For example, a channel model for a region is based on a global channel model, which applies for multiple regions, and/or a radio cell individual channel model, which applies to a radio cell covering the region. **In** some further examples the method may further comprise training a radio cell individual channel model based on measurements taken in said radio cell.

**In** a more specific example, the determining of the calculated reception quality for a particular region may comprise determining whether there is a line-of-sight path between the particular region and a serving antenna sector and determining a grade of reflection in the particular region for the serving antenna sector. The determining of the calculated reception quality for a particular region may further comprise determining a relative position of the particular region and the serving antenna sector and selecting a channel model matching the radio characteristics determined above by checking if a cell specific channel model with corresponding radio characteristics is available for the particular region and selecting the cell specific channel model if available. A global channel model with corresponding radio characteristics is selected otherwise. The reception quality is then calculated based on the selected channel model (which depends on whether there is a line-of-sight path, the grade of reflection, and the relative position of the particular region and the serving antenna sector). It may be further checked if there are other potential serving antenna sectors and the above steps may be repeated for the other antenna sectors if available. The best reception quality among the potential serving antenna sectors may then be selected. Examples may provide an efficient calculation method to calculating the reception quality of a region.

In further examples the method may further comprise storing information about measured reception qualities and/or predicted reception qualities per region in the grid in a database as a coverage map. Therewith, a map may be made available for efficient access to reception quality prediction. To further enhance the prediction, the method may further comprise requesting reception quality measurements per region in the grid and training the channel model based on measured reception qualities per region in the grid.

Another example is a computer program having a program code for performing one of the methods described herein, when the computer program is executed on a computer, a processor, or a programmable hardware component.

An apparatus for a mobile communication system is another example. The apparatus comprises one or more interfaces configured to communicate in the mobile communication system and one or more processing devices configured to perform one of the methods described herein. Examples further provide a mobile communication system comprising an example of the apparatus. A further example is user equipment or a network component, such as a server or an access node, comprising the apparatus. Yet another example is a mobile communication system with an example of the user equipment and/or an example of the network component.

## Brief description of the Figures

Some examples of apparatuses, methods, and/or computer programs will be described in the following by way of example only, and with reference to the accompanying figures, in which

Fig. 1 shows a flowchart of an example of a method for predicting a reception quality in a mobile communication system;

Fig. 2 shows a block diagram of an example of an apparatus for predicting a reception quality in a mobile communication system;

Fig. 3 illustrates an example scenario of a live video production;

Fig. 4 shows an example of a grid of regions;

Fig. 5 depicts different angles of a mobile terminal to a vertical of an antenna sector; and

Fig. 6 illustrates a system for RSRP prediction in an example.

## Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

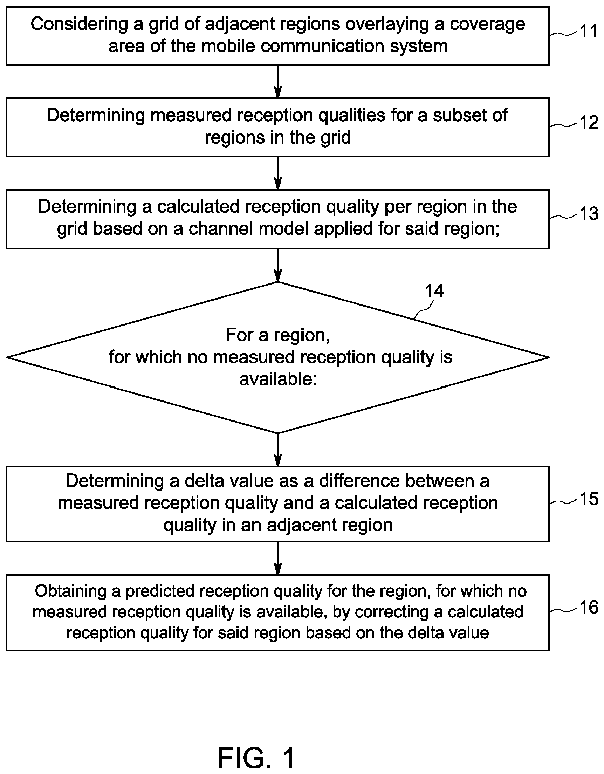

Fig. 1 shows a flowchart of an example of a method 10 for predicting a reception quality in a mobile communication system. The method 10 for predicting a reception quality in a mobile communication system comprises considering 11 a grid of adjacent regions overlaying a coverage area of the mobile communication system and determining 12 measured reception qualities (at least) for a subset of regions in the grid. The method 10 further comprises determining 13 a calculated reception quality per region in the grid based on a channel model applied for said region. For a region, for which no measured reception quality is available, the method 10 further comprises determining 15 a delta value as a difference between a measured reception quality and a calculated reception quality in an adjacent region and obtaining 16 a predicted reception quality for the region, for which no measured reception quality is available, by correcting a calculated reception quality for said region based on the delta value.

The measured reception quality per region may be any measure that enables an evaluation of a data reception quality in a region. For example, a measured reception quality is a reference signal reception power, RSRP, measured by user equipment in a region, the calculated reception quality is a calculated RSRP for a region, and the predicted reception quality is a predicted RSRP for a region.

RSRP is only one quality measure as defined by 3GPP. There are multiple other quality measures that could be used reception quality measure. Examples are received signal code power (RSCP), reference signal received quality (RSRQ), reference signal signal-to-interference ratio (RS SIR), reference signal signal-to-interference-and-noise ratio (RS SINR), reference signal signal-to-noise ratio (RS SNR), etc. The term reference signal indicates that the signal used for conducting such a measurement is known at the mobile terminal or UE. There are other terms for known signals such as pilot signal, pilot symbol, pilot sequence, reference symbol, reference sequence, training signal, training symbol, training sequence, etc.

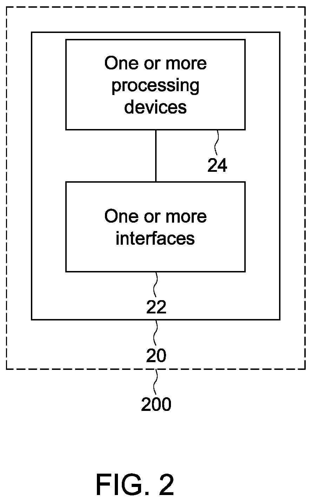

Fig. 2 shows a block diagram of an example of an apparatus 20 for predicting a reception quality in a mobile communication system. The apparatus 20 for the mobile communication system comprises one or more interfaces 22, which are configured to communicate in the mobile communication system, and which are coupled to one or more processing devices 24. The one or more processing devices 24 are configured to perform one of the methods described herein. Fig. 2 also illustrates an example of a UE or network entity 200 comprising an example of the apparatus 20. The example of the UE or network component 200 is shown in dotted lines as it is optional from the perspective of the apparatus 20. Yet another example is a mobile communication system with an example of the user equipment 200 and/or an example of the network component 200.

As illustrated in Fig. 2, the respective one or more processing devices 24 are coupled to the one or more interfaces 22. The one or more interfaces 22 may correspond to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, etc., which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc.

In examples measurements may be carried out by UEs, mobile terminals, or communication devices, which may communicate in the mobile communication system with the network entity, e.g., a base station. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity may correspond to a NodeB, an eNodeB, an ngNB, a BTS (Base Transceiver Station), an access point, etc.

The mobile communication system may be cellular. The term cell refers to a coverage area of radio services provided by a transmission point, a remote unit, a remote head, a remote radio head, communication device, network entity or a NodeB, an eNodeB, an ngNB, respectively. It should be noted that a base station or any of the listed entities may provide multiple cells. However, since a cell is provided by a base station, the terms cell and base station may be used synonymously in this description, even if a base station provides multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

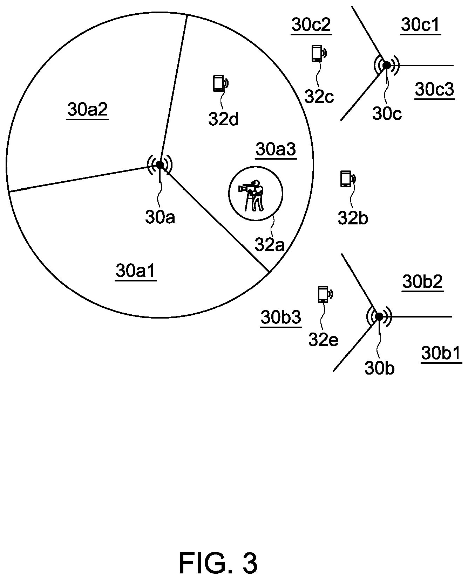

Fig. 3 illustrates an example scenario of a live video production, in which it is beneficial to predict the reception quality. For example, a producer would like to know in advance (e.g days or weeks before), whether a reception quality at a certain location will be sufficient for live video transmission. Fig. 3 shows three antenna locations 30a, 30b, and 30c, each having three sectors or cells 30a1, 30a2 30a3, 30b1, 30b2, 30b3, 30c1, 30c2, 30c3. The sectors correspond to cells in this example, which are used to serve a number of UEs 32a, 32b, 32c, 32d, and 32e. In the example of Fig. 3 the intention is to use the UE 32a for video production. It is therefore desirable to predict the reception quality of 32a to assure that it can meet quality requirements of live video production.

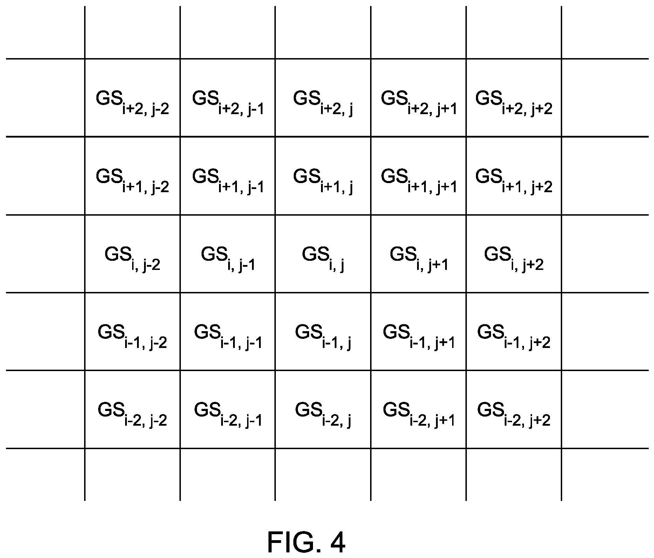

Examples may therefore provide a system and algorithm for RSRP prediction. Fig. 4 shows an example of a grid of regions, which can be used to overlay one or more cells of a mobile communication system. Fig. 4 shows a grid structure with regions GS. To create an RSRP map for a mobile network, a geographical coverage of the mobile network can be built in a grid with regions in squares, e. g. 5m x 5m, 10m x 10m, 20m x 20 m, 50m x 50m, 100m x 100m, called grid square (GS) in the example shown in Fig. 4. In this specific example a region has the shape of a square. A square is therefore an example shape of a region. In other examples almost any other shape of a region is also conceivable, e.g. hexagon, triangle, rectangle, polygon, mixed, etc. Each GS is associated with a predicted RSRP, e.g. Rij, in a certain grid square GSij and a measured RSRP as well if available (i and j are positive integers). The measured RSRP can be a mean value of multiple measured RSRPs. In examples of the method 10, the measured reception quality may be an average of a plurality of measurements taken in said square (region). In this example a combination of a calculation based on channel models and individual measurement made by a mobile terminal or any other measurement device is used for the prediction. Fig. 4 also illustrates the neighbor relations structure of the regions. For example, region $GS_{i,j}$ has eight neighbor regions in a first tier ($GS_{i+1,j-1}$, $GS_{i+1,j}$, $GS_{i+1,j+1}$, $GS_{i,j-1}$, $GS_{i,j+1}$, $GS_{i-1,j-1}$, $GS_{i-1,j}$, and $GS_{i-1,j1-1}$). The regions of the first tier are also referred to as first level regions and comprise the direct neighbor regions. Fig. 4 also illustrates regions of a second tier, which are the 16 regions being directly adjacent to the regions of the first tier but not adjacent to region $GS_{i,j}$. The second tier or second level regions comprises the outer regions shown in Fig. 4: $GS_{i+2,(j-2,...,j+2)}$, $GS_{(i+1, i ,i-1),j-2}$, $GS_{(i+1, i ,i-1),j+2}$, and $GS_{i-2, (j-2,...,j+2)}$. The second tier is made up by the regions that are distanced from region $GS_{i,j}$ by one intermediate region. Of, course in a practical example there are further tiers and higher-level regions as well.

To obtain a good predicted RSRP value, a categorization algorithm of channel models is used in this example. The determining 13 of the calculated reception quality may use different channel models based on the characteristic of the radio environment in said region. For example, channel models are categorized according to characteristics of radio environments, e.g. LOS (line-of-sight) or NLOS (non-line-of-sight), grade of reflections. Table 1 below shows an example of categorization of channel models.

Table 1 categorization of channel models

| Channel model type | LOS or NLOS | Grade of reflection |
|---|---|---|
| Type 1 | LOS | High |
| Type 2 | LOS | Normal |
| Type 3 | LOS | Low |
| Type 4 | NLOS | High |
| Type 5 | NLOS | Normal |
| Type 6 | NLOS | Low |

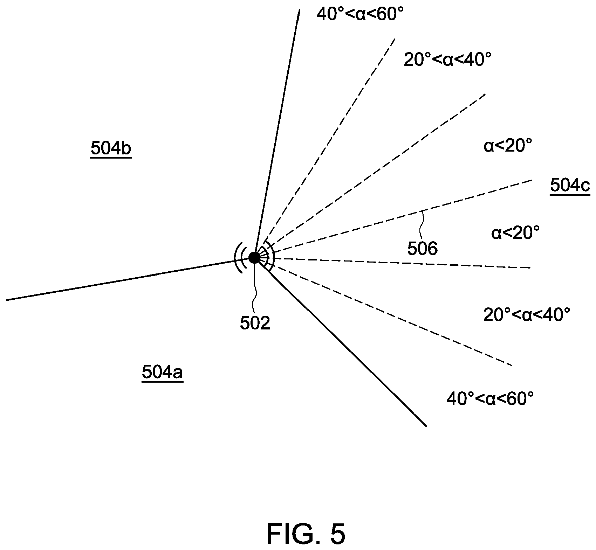

The channel models in Table 1 can be further categorized in different angels of a mobile terminal to the vertical of antenna, e. g. $\alpha < 20°$, $20° < \alpha < 40°$, $40° < \alpha < 60°$, shown as in Fig. 5. Fig. 5 depicts different angles of a mobile terminal to the vertical/center of an antenna sector. Fig. 5 shows an antenna location 502 in the center covering three sectors, 504a, 504b, and 504c. As can be seen in Fig. 5, the center line 506 divides the 120°-sector 504c in two 60°-regions and the sub-sections indicate the absolute angles $\alpha$ from the center line 506. Hence, the characteristics of the radio environment in a region are distinguished based on a presence of a line-of-sight connection, based on a grade of reflection present in the respective region, and/or based on a distance and an angle relative to a transmit antenna covering said region.

Channel models can be calibrated/trained by measured RSRPs in a radio environment corresponding the same type of radio channel. In some examples, the method 10 may hence further comprise training a channel model or a radio cell individual channel model based on measurements taken in said radio cell.

To increase the prediction quality, channel models can be further categorized as global channel models and radio cell individual channel models. The cell individual channel models are calibrated by the cell specific RSRPs if a high enough number of measured RSRPs are available in a specific cell. A channel model for a region may be based on a global channel model, which applies for multiple regions, and/or a radio cell individual channel model, which applies to a radio cell covering the region.

In an example, the RSRP prediction algorithm to calculate RSRP (Rij) for GSij using a channel model in Table 1 works as shown in the following Table 2:

Table 2 RSRP calculation algorithm

1. Determine NLOS or LOS between GSij and an antenna sector.
2. Determine a grade of reflection, e. g. by the grade of building density.
3. Determine the relative position of grid square to the serving antenna.
4. Check if cell specific channel model is available for predicted GS.
5. If yes, select a cell specific channel model, if not select a global channel model.
6. 6. Calculate the Rij using the selected channel model.
7. Check if there is another antenna sector in the coverage range of GSij, e.g. within 500 m radius of GSij (in other examples the radius may as well be 100m, 200m, 300m, 400m, 600m, etc.).
8. If yes, repeat 1-6.
9. If no, select the strongest Rij as the calculated RSRP and the radio cell used for this calculation as serving radio cell.

The determining 13 of the calculated reception quality for a particular region in this example comprises determining whether there is a line-of-sight path between the particular region and a serving antenna sector (step 1) and determining a grade of reflection in the particular region for the serving antenna sector (step2). The example further comprises determining a relative position of the particular region and the serving antenna sector (step3) and selecting a channel model matching the radio characteristics determined above by checking if a cell specific channel model with corresponding radio characteristics is available for the particular region (step 4) and selecting the cell specific channel model if available (step 5), selecting a global channel model with corresponding radio characteristics otherwise (step 5). The determining 13 further comprises calculating the reception quality based on the selected channel model (which is selected based on whether there is a line-of-sight path, the grade of reflection, and the relative position of the particular region and the serving antenna sector). The determining 13 then further comprises checking if there are other potential serving antenna sectors (step 7) and repeating the above steps for the other antenna sectors if available (step 8). The best reception quality is then selected as the serving antenna sector (step 9).

For example, the Rij calculation may use a channel model that is calibrated by parameters a, b, X_sigma, for example,

$$PL(d) = a*PL(d0) + b*10 \, n \, \log10(d/d0) + X\_sigma,$$

and

$$Rij = T - PL(d).$$

In this formula, PL(d) is the path loss in dB at distance d, PL(d0) is the path loss at a close-in reference distance d0, n is the path loss exponent, which indicates the rate at which the path loss increases with distance, and X_sigma is a zero-mean Gaussian random variable with standard deviation sigma, in dB. T is the transmit power from the antenna in dBm.

The measured RSRPs stored in a prediction database (DB) are associated with a position that can be provided by e.g. a GPS signal in the mobile terminal and a serving cell ID.

To increase accuracy of RSRP prediction, the calculated Rij is adjusted by a delta:

$$Rij' = Rij + delta.$$

In this equation delta could as well be subtracted, which is just a sign-variant depending on how delta is determined.

The algorithm to derive delta in an example can be implemented as shown in the following Table 3:

1.  Check if there is measured RSRP in a direct neighboring (or adjacent) grid region that is served by the same radio cell.
2.  If yes, calculate RSRP based on the RSRP prediction algorithm for the grid regionthat has measured RSRP (determining 13 in Fig. 1).
3.  check if there is measured RSRP in second neighboring grid region,
4.  if yes, calculate RSRP based on the RSRP prediction algorithm for the second neighboring grid region that has measured RSRP.
5.  Calculate delta = measured RSRP - calculated RSRP (the sign of delta may be changed using the calculated RSRP-measured RSRP), if step 2 and/or step 4 is yes. if there is measured RSRP in multiple grid regions, a weighted mean value of delta is derived.
6.  If there is no measured RSRP in neighboring region, check if a cell specific delta for the corresponding channel model is available. If yes, cell specific delta corresponding to the channel model will be used. If not, then a global delta of the corresponding type of the channel model is used.

In examples, the obtaining 16 of the predicted reception quality for a specific region may comprise checking for the specific region, for which no measured reception quality is available, if a measured quality is available for one or more neighboring regions served by the same radio cell as the specific region (step 1). In case a measured quality for one or more neighboring regions is available, the method 10 comprises determining 13 one or more calculated reception quality values for the one or more neighboring regions (step 2). Accordingly, one or more delta values may be determined 15 (step 5) based on one or more differences between the one or more calculated reception qualities and the one or more measured reception qualities in the respective one or more neighboring regions (step 4). In case no measured quality is available for a neighboring region served by the same radio cell as the specific region, the delta value may be determined as a predefined cell-specific delta value or as a predefined global delta value in line with a respective channel model (step 6). Hence multiple neighbor regions may be considered for predicting a reception quality for a region, for which no measurement is available. For example, only an outdated measurement may be available, or it may be known that radio conditions for a region changed but there is no up-to-date measurement, yet. Such a region may then be considered as not having a valid measured reception quality available.

In case multiple delta values are available for multiple neighboring regions, the method 10 may further comprise averaging the multiple delta values to obtain an average delta value, which is used to correct the calculated reception quality for a specific region, for which no measured reception quality is available, to obtain the predicted reception quality for the specific region. In examples the averaging may consider delta values of multiple tiers of neighbor regions of the specific region, for which no measured reception quality is available. The delta values may be weighted based on a distance between the respective region of a delta value and the specific region, for which no measured reception quality is available. For example, a delta of direct neighboring regions can be weighted with e.g. 1.0 while a delta of the second neighboring regions can be weighted e. g. 0,5 and so on. The weight can be calibrated by measurements.

Third or higher-level neighboring grid regions may be considered to derive delta if it improves the overall prediction quality. A cell specific delta can be derived from measured RSRPs of this specific cell while a global delta can be derived from measured RSRPs from the whole network for the corresponding type of a channel model. Some abnormality of a grid region can be identified if delta is much too big, or a serving radio cell is much far away from the grid region. The abnormality is handled differently. For example, such a difference may be determined when a predicted reception quality turns out to differ from a measured reception quality for the same region by more than a predefined threshold.

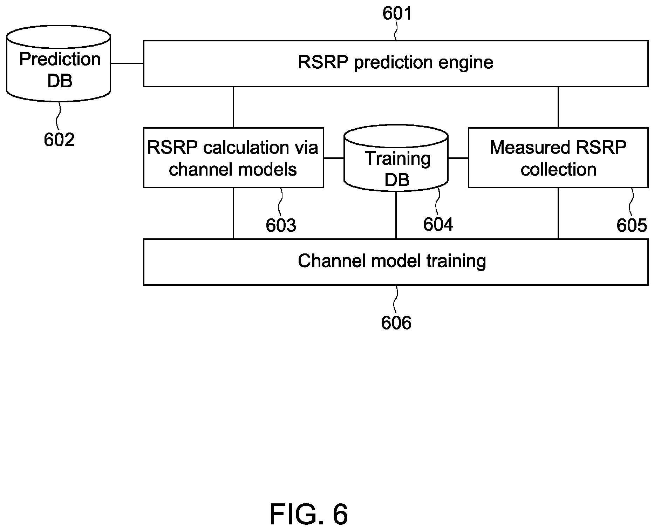

Fig. 6 illustrates a system for RSRP prediction in an example. Such a system may be implemented using the above-described one or more processing devices 24. Fig. 6 shows the RSRP prediction engine 601, which is coupled to a prediction DB 602, e.g. via the above described one or more interfaces 22. The RSRP prediction engine 601 is further coupled to an RSRP calculation 603 and to a measured RSRP collection 605. The RSRP calculation 603 and the measured RSRP collection 605 are further coupled to a training DB 604, and the three of them are coupled to a channel model training module 606. As outlined above, the one or more interfaces 22 may be used to read/write data from the DB 604, 602. The RSRP calculation 603 uses the trained channels models for the RSRP calculation. The RSRP prediction algorithm can be implemented in a system as shown in Fig. 6 as an example.

The system for RSRP prediction comprises the following entities: RSRP prediction engine 601, RSRP calculation 603, channel model training 606, measured RSRP collection 605, channel model training DB 604 and RSRP prediction DB 602. The interaction of entities in Fig. 6 are based on API (Application Programming Interfaces). The RSRP prediction engine 601 creates the prediction DB 602 that stores radio coverage map as in Fig. 4. The method 10 in this example further comprises storing information about measured reception qualities and/or predicted reception qualities per region in the grid in a database as a coverage map.

Measured RSRPs are fed via measured RSRP collection entity 605 and stored in the prediction DB 602. The RSRP prediction engine 601 can request an RSRP measurement to measured RSRP collection entity 605 on demand. In this example, the method 10 further comprises requesting reception quality measurements per region in the grid and training the channel model based on measured reception qualities per region in the grid.

In a prediction case, the RSRP prediction engine 601 gets calculated RSRP from the RSRP calculation entity 603 based on the algorithm described in Table 2. By deriving delta as described in Table 3, the RSRP prediction engine 601 adapts the calculated RSRP by delta.

The channel model training entity 606 trains channel models as described in Table 1. The measured RSRP collection entity 605 may trigger the channel model training. The channel model training entity 606 can request measured RSRPs from the measured RSRP collection entity 605 on demand.

The system can be initiated with global channel models that are based on measured RSRP even from other networks. However, it is recommended that global channel models are trained with measured RSRPs from the network that is to deploy the RSRP prediction system.

After initialization, the system can offer RSRP prediction for any location in the whole network. But measured RSRP will be continued to be collected to improve channel models. The measured RSRP associated with a geo-location/cell identification will be stored in RSRP prediction DB 602 and channel model training DB 604. As soon as the number of newly measured RSRPs stored in training DB 604 for a channel model exceed a predefined value, say 10, 20, 50,100 or 200, the corresponding channel model will be retrained. By doing so, channel models can be continuously improved.

Examples may provide a system and an algorithm that predicts RSRP through calculation using global, or radio cell specific channel models and adjusting a calculated RSRP with a delta value that is derived from measured RSRPs. For example, the measured RSRP is labeled with a geo position and a cell ID. The measured RSRP may be stored in a prediction DB and a training DB. Channel models can be categorized in different characteristics of radio environments, e. g. LOS, NLOS, grade of reflection and position of mobile terminal to the serving antenna. Channel models may be trained with measured RSRPs that are measured in a radio environment having characteristics corresponding to the type of a channel model.

Furthermore, RSRP can be calculated using a channel model that best matches the characteristics of radio environment of a grid region. A delta for adjusting the calculated RSRP may be either derived from measured RSRP of neighboring grid region or of grid region in a cell or in a network. The delta for RSRP adjustment may be weighted according to the position and distance of the neighboring grid region to the predicted grid region. An abnormality of a grid region may be identified if delta between the measured RSRP and predicted RSRP is very large, or the serving cell is much farther away than a radio cell that is close to the grid square. An abnormal grid square may be handled differently.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended.

Furthermore, features of a claim should also be included for any other independent claim, even if that claim is not directly defined as dependent on that other independent claim.

## Claims

1.  A method (10) for predicting a reception quality in a mobile communication system, the method (10) comprising

    considering (11) a grid of adjacent regions overlaying a coverage area of the mobile communication system;
    determining (12) measured reception qualities for a subset of regions in the grid;
    determining (13) a calculated reception quality per region in the grid based on a channel model applied for said region;
    for a region, for which no measured reception quality is available (14):

    determining (15) a delta value as a difference between a measured reception quality and a calculated reception quality in an adjacent region;
    obtaining (16) a predicted reception quality for the region, for which no measured reception quality is available, by correcting a calculated reception quality for said region based on the delta value.

2.  The method (10) of claim 1, wherein a measured reception quality is a reference signal reception power, RSRP, measured by user equipment in a region, wherein the calculated reception quality is a calculated RSRP for a region, and wherein the predicted reception quality is a predicted RSRP for a region.

3.  The method (10) of one of the claims 1 or 2, wherein the obtaining (16) of a predicted reception quality for a specific region further comprises

    checking for the specific region, for which no measured reception quality is available, if a measured quality is available for one or more neighboring regions served by the same radio cell as the specific region, and in case a measured quality for one or more neighboring regions is available, determining one or more calculated reception quality values for the one or more neighboring regions,
    determining one or more delta values based on one or more differences between the one or more calculated reception qualities and the one or more measured reception qualities in the respective one or more neighboring regions, and
    in case no measured quality is available for a neighboring region served by the same radio cell as the specific region, determining the delta value as a predefined cell-specific delta value or as a predefined global delta value in line with a respective channel model.

4.  The method (10) of claim 3, wherein in case multiple delta values are available for multiple neighboring regions, averaging the multiple delta values to obtain an average delta value, which is used to correct the calculated reception quality for the specific region, for which no measured reception quality is available, to obtain the predicted reception quality for the specific region.

5.  The method (10) of claim 4, wherein the averaging comprises considering delta values of multiple tiers of neighbor regions of the specific region, for which no measured reception quality is available, further comprising weighting the delta values based on a distance between the respective region of a delta value and the specific region, for which no measured reception quality is available.

6.  The method (10) of one of the claims 1 to 5, wherein the measured reception quality is an average of a plurality of measurements taken in said region.

7.  The method (10) of one of the claims 1 to 6, wherein the determining (13) of the calculated reception quality uses different channel models based on the characteristic of the radio environment in said region.

8. The method (10) of claim 7, wherein the characteristics of the radio environment in a region are distinguished based on a presence of a line-of-sight connection, based on a grade of reflection present in the respective region, and/or based on a distance and an angle relative to a transmit antenna covering said region.

9. The method (10) of claims 1 to 8, wherein a channel model for a region is based on a global channel model, which applies for multiple regions, and/or a radio cell individual channel model, which applies to a radio cell covering the region.

10. The method (10) of claim 9, further comprising training a radio cell individual channel model based on measurements taken in said radio cell.

11. The method (10) of one of the claims 1 to 10, wherein the determining (13) of the calculated reception quality for a particular region comprises

determining whether there is a line-of-sight path between the particular region and a serving antenna sector;
determining a grade of reflection in the particular region for the serving antenna sector;
determining a relative position of the particular region and the serving antenna sector;
selecting a channel model matching the radio characteristics determined above by checking if a cell specific channel model with corresponding radio characteristics is available for the particular region and selecting the cell specific channel model if available, selecting a global channel model with corresponding radio characteristics otherwise;
calculating the reception quality based on the selected channel model;
checking if there are other potential serving antenna sectors and repeating the above steps for the other antenna sectors if available,
selecting the best reception quality as the serving antenna sector.

12. The method (10) of one of the claims 1 to 11, further comprising storing information about measured reception qualities and/or predicted reception qualities per region in the grid in a database (602) as a coverage map.

13. The method (10) of one of the claims 1 to 12, further comprising requesting reception quality measurements per region in the grid and training the channel model based on measured reception qualities per region in the grid.

14. A computer program having a program code for performing one of the methods (10) of one of the claims 1 to 13, when the computer program is executed on a computer, a processor, or a programmable hardware component.

15. An apparatus (20) for a mobile communication system, comprising

one or more interfaces (22) configured to communicate in the mobile communication system; and
one or more processing devices (24) configured to perform one of the methods of one of the claims 1 to 13.

**Patentansprüche**

1. Ein Verfahren (10) zum Vorhersagen einer Empfangsqualität in einem Mobilkommunikationssystem, das Verfahren (10) umfassend

Berücksichtigen (11) eines Gitters von angrenzenden Regionen, die einen Abdeckungsbereich des Mobilkommunikationssystems überlagern;
Bestimmen (12) von gemessenen Empfangsqualitäten für einen Teilsatz von Regionen in dem Gitter;
Bestimmen (13) einer berechneten Empfangsqualität pro Region in dem Gitter basierend auf einem Kanalmodell, das für die Region angewendet wird;
für eine Region, für die keine gemessene Empfangsqualität verfügbar ist (14):

Bestimmen (15) eines Deltawerts als eine Differenz zwischen einer gemessenen Empfangsqualität und einer berechneten Empfangsqualität in einer angrenzenden Region;
Erhalten (16) einer vorhergesagten Empfangsqualität für die Region, für die keine gemessene Empfangsqualität verfügbar ist, durch Korrigieren einer berechneten Empfangsqualität für die Region basierend auf dem Deltawert.

2. Das Verfahren (10) gemäß Anspruch 1, wobei eine gemessene Empfangsqualität eine Referenzsignalempfangsleistung, RSRP, ist, die durch ein Benutzerendgerät in einer Region gemessen wird, wobei die berechnete Empfangsqualität eine berechnete RSRP für eine Region ist, und wobei die vorhergesagte Empfangsqualität eine vorhergesagte RSRP für eine Region ist.

3. Das Verfahren (10) gemäß einem der Ansprüche 1 oder 2, das Erhalten (16) einer vorhergesagten Empfangsqualität für eine spezifische Region ferner umfassend

   Prüfen für die spezifische Region, für die keine gemessene Empfangsqualität verfügbar ist, ob eine gemessene Qualität für eine oder mehrere benachbarte Regionen verfügbar ist, die durch dieselbe Funkzelle wie die spezifische Region bedient werden, und falls eine gemessene Qualität für eine oder mehrere benachbarte Regionen verfügbar ist, Bestimmen eines oder mehrerer berechneter Empfangsqualitätswerte für die eine oder die mehreren benachbarten Regionen,
   Bestimmen eines oder mehrerer Deltawerte basierend auf einer oder mehreren Differenzen zwischen der einen oder den mehreren berechneten Empfangsqualitäten und der einen oder den mehreren gemessenen Empfangsqualitäten in der jeweiligen einen oder den mehreren benachbarten Regionen, und
   falls keine gemessene Qualität für eine benachbarte Region verfügbar ist, die durch dieselbe Funkzelle wie die spezifische Region bedient wird, Bestimmen des Deltawerts als ein vordefinierter zellenspezifischer Deltawert oder als ein vordefinierter globaler Deltawert in Übereinstimmung mit einem jeweiligen Kanalmodell.

4. Das Verfahren (10) gemäß Anspruch 3, wobei, falls mehrere Deltawerte für mehrere benachbarte Regionen verfügbar sind, Mitteln der mehreren Deltawerte, um einen durchschnittlichen Deltawert zu erhalten, der verwendet wird, um die berechnete Empfangsqualität für die spezifische Region zu korrigieren, für die keine gemessene Empfangsqualität verfügbar ist, um die vorhergesagte Empfangsqualität für die spezifische Region zu erhalten.

5. Das Verfahren (10) gemäß Anspruch 4, wobei das Mitteln ein Berücksichtigen von Deltawerten mehrerer Ebenen von Nachbarregionen der spezifischen Region umfasst, für die keine gemessene Empfangsqualität verfügbar ist, ferner umfassend ein Gewichten der Deltawerte basierend auf einer Distanz zwischen der jeweiligen Region eines Deltawerts und der spezifischen Region, für die keine gemessene Empfangsqualität verfügbar ist.

6. Das Verfahren (10) gemäß einem der Ansprüche 1 bis 5, wobei die gemessene Empfangsqualität ein Durchschnitt einer Mehrzahl von Messungen ist, die in der Region vorgenommen werden.

7. Das Verfahren (10) gemäß einem der Ansprüche 1 bis 6, wobei das Bestimmen (13) der berechneten Empfangsqualität unterschiedliche Kanalmodelle basierend auf der Charakteristik der Funkumgebung in der Region verwendet.

8. Das Verfahren (10) gemäß Anspruch 7, wobei die Charakteristika der Funkumgebung in einer Region basierend auf einem Vorhandensein einer Sichtlinienverbindung, basierend auf einem Reflexionsgrad, der in der jeweiligen Region vorhanden ist, und/oder basierend auf einer Distanz und einem Winkel relativ zu einer Sendeantenne, die die Region abdeckt, unterschieden werden.

9. Das Verfahren (10) gemäß den Ansprüchen 1 bis 8, wobei ein Kanalmodell für eine Region auf einem globalen Kanalmodell basiert, das für mehrere Regionen gilt, und/oder einem funkzellenindividuellen Kanalmodell, das für eine Funkzelle gilt, die die Region abdeckt.

10. Das Verfahren (10) gemäß Anspruch 9, ferner umfassend ein Trainieren eines funkzellenindividuellen Kanalmodells basierend auf Messungen, die in der Funkzelle vorgenommen werden.

11. Das Verfahren (10) gemäß einem der Ansprüche 1 bis 10, das Bestimmen (13) der berechneten Empfangsqualität für eine bestimmte Region umfassend

    Bestimmen, ob es einen Sichtlinienpfad zwischen der bestimmten Region und einem bedienenden Antennensektor gibt;
    Bestimmen eines Reflexionsgrads in der bestimmten Region für den bedienenden Antennensektor;
    Bestimmen einer relativen Position der bestimmten Region und des bedienenden Antennensektors;
    Auswählen eines Kanalmodells, das mit den oben bestimmten Funkcharakteristika übereinstimmt, durch Prüfen, ob ein zellenspezifisches Kanalmodell mit entsprechenden Funkcharakteristika für die bestimmte Region verfügbar ist, und Auswählen des zellenspezifischen Kanalmodells, falls verfügbar, andernfalls Auswählen eines globalen Kanalmodells mit entsprechenden Funkcharakteristika;

Berechnen der Empfangsqualität basierend auf dem ausgewählten Kanalmodell;

Prüfen, ob es andere potenzielle bedienende Antennensektoren gibt, und Wiederholen der obigen Schritte für die anderen Antennensektoren, falls verfügbar,

Auswählen der besten Empfangsqualität als bedienenden Antennensektor.

12. Das Verfahren (10) gemäß einem der Ansprüche 1 bis 11, ferner umfassend ein Speichern von Informationen über gemessene Empfangsqualitäten und/oder vorhergesagte Empfangsqualitäten pro Region in dem Gitter in einer Datenbank (602) als eine Abdeckungskarte.

13. Das Verfahren (10) gemäß einem der Ansprüche 1 bis 12, ferner umfassend ein Anfordern von Empfangsqualitätsmessungen pro Region in dem Gitter und Trainieren des Kanalmodells basierend auf gemessenen Empfangsqualitäten pro Region in dem Gitter.

14. Ein Computerprogramm mit einem Programmcode zum Durchführen eines der Verfahren (10) gemäß einem der Ansprüche 1 bis 13, wenn das Computerprogramm auf einem Computer, einem Prozessor oder einer programmierbaren Hardwarekomponente ausgeführt wird.

15. Eine Vorrichtung (20) für ein Mobilkommunikationssystem, umfassend

eine oder mehrere Schnittstellen (22), die ausgebildet sind, um in dem Mobilkommunikationssystem zu kommunizieren; und

eine oder mehrere Verarbeitungsvorrichtungen (24), die ausgebildet sind, um eines der Verfahren gemäß einem der Ansprüche 1 bis 13 durchzuführen.

## Revendications

1. Procédé (10) de prédiction d'une qualité de réception dans un système de communication mobile, le procédé (10) comprenant le fait de

considérer (11) une grille de régions adjacentes recouvrant une zone de couverture du système de communication mobile ;

déterminer (12) des qualités de réception mesurées pour un sous-ensemble de régions dans la grille ;

déterminer (13) une qualité de réception calculée par région dans la grille sur la base d'un modèle de canal appliqué pour ladite région ;

pour une région pour laquelle aucune qualité de réception mesurée n'est disponible (14) :

déterminer (15) une valeur delta en tant que différence entre une qualité de réception mesurée et une qualité de réception calculée dans une région adjacente ;

obtenir (16) une qualité de réception prédite pour la région pour laquelle aucune qualité de réception mesurée n'est disponible en corrigeant une qualité de réception calculée pour ladite région sur la base de la valeur delta.

2. Procédé (10) selon la revendication 1, dans lequel une qualité de réception mesurée est une puissance de réception de signal de référence, RSRP, mesurée par un équipement utilisateur dans une région, dans lequel la qualité de réception calculée est une RSRP calculée pour une région, et dans lequel la qualité de réception prédite est une RSRP prédite pour une région.

3. Procédé (10) selon l'une des revendications 1 ou 2, dans lequel l'obtention (16) d'une qualité de réception prédite pour une région spécifique comprend en outre le fait de vérifier pour la région spécifique pour laquelle aucune qualité de réception mesurée n'est disponible si une qualité mesurée est disponible pour une ou plusieurs régions voisines desservies par la même cellule radio que la région spécifique, et dans le cas où une qualité mesurée est disponible pour une ou plusieurs régions voisines, déterminer une ou plusieurs valeurs de qualité de réception calculées pour les une ou plusieurs régions voisines,

déterminer une ou plusieurs valeurs delta sur la base d'une ou plusieurs différences entre les une ou plusieurs qualités de réception calculées et les une ou plusieurs qualités de réception mesurées dans les une ou plusieurs régions voisines respectives, et

dans le cas où aucune qualité mesurée n'est disponible pour une région voisine desservie par la même cellule radio que la région spécifique, déterminer la valeur delta en tant que valeur delta spécifique à une cellule prédéfinie ou en tant que valeur delta globale prédéfinie conformément à un modèle de canal respectif.

4. Procédé (10) selon la revendication 3, dans lequel dans le cas où de multiples valeurs delta sont disponibles pour de multiples régions voisines, calculer la moyenne des multiples valeurs delta pour obtenir une valeur delta moyenne qui est utilisée pour corriger la qualité de réception calculée pour la région spécifique pour laquelle aucune qualité de réception mesurée n'est disponible pour obtenir la qualité de réception prédite pour la région spécifique.

5. Procédé (10) selon la revendication 4, dans lequel le calcul de la moyenne comprend le fait de considérer des valeurs delta de multiples niveaux de régions voisines de la région spécifique pour laquelle aucune qualité de réception mesurée n'est disponible, comprenant en outre le fait de pondérer les valeurs delta sur la base d'une distance entre la région respective d'une valeur delta et la région spécifique pour laquelle aucune qualité de réception mesurée n'est disponible.

6. Procédé (10) selon l'une des revendications 1 à 5, dans lequel la qualité de réception mesurée est une moyenne d'une pluralité de mesures prises dans ladite région.

7. Procédé (10) selon l'une des revendications 1 à 6, dans lequel la détermination (13) de la qualité de réception calculée utilise différents modèles de canal sur la base de la caractéristique de l'environnement radio dans ladite région.

8. Procédé (10) selon la revendication 7, dans lequel les caractéristiques de l'environnement radio dans une région sont distinguées sur la base d'une présence d'une connexion de visibilité directe, sur la base d'un degré de réflexion présent dans la région respective, et/ou sur la base d'une distance et d'un angle par rapport à une antenne d'émission couvrant ladite région.

9. Procédé (10) selon les revendications 1 à 8, dans lequel un modèle de canal pour une région est basé sur un modèle de canal global qui s'applique à de multiples régions, et/ou un modèle de canal individuel de cellule radio qui s'applique à une cellule radio couvrant la région.

10. Procédé (10) selon la revendication 9, comprenant en outre le fait d'entraîner un modèle de canal individuel de cellule radio sur la base de mesures prises dans ladite cellule radio.

11. Procédé (10) selon l'une des revendications 1 à 10, dans lequel la détermination (13) de la qualité de réception calculée pour une région particulière comprend le fait de déterminer s'il y a un trajet de visibilité directe entre la région particulière et un secteur d'antenne de desserte ;

déterminer un degré de réflexion dans la région particulière pour le secteur d'antenne de desserte ;
déterminer une position relative de la région particulière et du secteur d'antenne de desserte ;
sélectionner un modèle de canal correspondant aux caractéristiques radio déterminées ci-dessus en vérifiant si un modèle de canal spécifique à une cellule avec des caractéristiques radio correspondantes est disponible pour la région particulière et sélectionner le modèle de canal spécifique à une cellule s'il est disponible, sélectionner un modèle de canal global avec des caractéristiques radio correspondantes dans le cas contraire ;
calculer la qualité de réception sur la base du modèle de canal sélectionné ;
vérifier s'il y a d'autres secteurs d'antenne de desserte potentiels et répéter les étapes ci-dessus pour les autres secteurs d'antenne s'ils sont disponibles,
sélectionner la meilleure qualité de réception en tant que secteur d'antenne de desserte.

12. Procédé (10) selon l'une des revendications 1 à 11, comprenant en outre le fait de stocker des informations sur des qualités de réception mesurées et/ou des qualités de réception prédites par région dans la grille dans une base de données (602) en tant que carte de couverture.

13. Procédé (10) selon l'une des revendications 1 à 12, comprenant en outre le fait de demander des mesures de qualité de réception par région dans la grille et d'entraîner le modèle de canal sur la base de qualités de réception mesurées par région dans la grille.

**14.** Programme informatique ayant un code de programme pour exécuter l'un des procédés (10) selon l'une des revendications 1 à 13, lorsque le programme informatique est exécuté sur un ordinateur, un processeur ou un composant matériel programmable.

**15.** Appareil (20) pour un système de communication mobile, comprenant

une ou plusieurs interfaces (22) configurées pour communiquer dans le système de communication mobile ; et un ou plusieurs dispositifs de traitement (24) configurés pour exécuter l'un des procédés selon l'une des revendications 1 à 13.

```
┌──────────────────────────────────────────────────────┐
│ Considering a grid of adjacent regions overlaying a   │──~11
│ coverage area of the mobile communication system      │
└──────────────────────────────────────────────────────┘
                          │
                          ▼
┌──────────────────────────────────────────────────────┐
│ Determining measured reception qualities for a subset │──~12
│ of regions in the grid                                │
└──────────────────────────────────────────────────────┘
                          │
                          ▼
┌──────────────────────────────────────────────────────┐
│ Determining a calculated reception quality per region │──~13
│ in the grid based on a channel model applied for said │
│ region;                                               │
└──────────────────────────────────────────────────────┘
                          │
                          ▼
                        14
        For a region,
  for which no measured reception quality is
              available:
                          │
                          ▼
┌──────────────────────────────────────────────────────┐
│ Determining a delta value as a difference between a   │──~15
│ measured reception quality and a calculated reception │
│ quality in an adjacent region                         │
└──────────────────────────────────────────────────────┘
                          │
                          ▼
┌──────────────────────────────────────────────────────┐
│ Obtaining a predicted reception quality for the       │──~16
│ region, for which no measured reception quality is    │
│ available, by correcting a calculated reception       │
│ quality for said region based on the delta value      │
└──────────────────────────────────────────────────────┘
```

FIG. 1

FIG. 2

FIG. 3

| $GS_{i+2, j-2}$ | $GS_{i+2, j-1}$ | $GS_{i+2, j}$ | $GS_{i+2, j+1}$ | $GS_{i+2, j+2}$ |
| $GS_{i+1, j-2}$ | $GS_{i+1, j-1}$ | $GS_{i+1, j}$ | $GS_{i+1, j+1}$ | $GS_{i+1, j+2}$ |
| $GS_{i, j-2}$ | $GS_{i, j-1}$ | $GS_{i, j}$ | $GS_{i, j+1}$ | $GS_{i, j+2}$ |
| $GS_{i-1, j-2}$ | $GS_{i-1, j-1}$ | $GS_{i-1, j}$ | $GS_{i-1, j+1}$ | $GS_{i-1, j+2}$ |
| $GS_{i-2, j-2}$ | $GS_{i-2, j-1}$ | $GS_{i-2, j}$ | $GS_{i-2, j+1}$ | $GS_{i-2, j+2}$ |

FIG. 4

40°<α<60°

20°<α<40°

504b

α<20°

504c

α<20°

506

502

20°<α<40°

504a

40°<α<60°

FIG. 5

601

Prediction DB

602

RSRP prediction engine

RSRP calculation via channel models

Training DB

Measured RSRP collection

603

604

605

Channel model training

606

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230308199 A1